Europäisches Patentamt

European Patent Office

Office européen des brevets

(19)

(11) **EP 1 608 196 A1**

(12) **EUROPEAN PATENT APPLICATION**

(43) Date of publication:
**21.12.2005 Bulletin 2005/51**

(51) Int Cl.⁷: **H04Q 7/38**, H04L 12/18

(21) Application number: **04014357.0**

(22) Date of filing: **18.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **MATSUSHITA ELECTRIC INDUSTRIAL CO., LTD.**
**Kadoma-shi, Osaka 571-8501 (JP)**

(72) Inventors:
• **Charpentier, Frédéric**
**10115 Berlin (DE)**

• **Löhr, Joachim**
**64287 Darmstadt (DE)**
• **Petrovic, Dragan**
**64295 Darmstadt (DE)**

(74) Representative: **Grünecker, Kinkeldey, Stockmair & Schwanhäusser Anwaltssozietät**
**Maximilianstrasse 58**
**80538 München (DE)**

(54) **Detection of notifications in a communication system**

(57)     A power-saving and reliable method for detecting notifications in a communication device is disclosed comprising the steps of successively receiving a finite set of notification indicators from a communication network, which in combination represent a notification identifier associated with the device; subsequently checking each received notification indicator whether it is positive or negative; determining, after each checked notification indicator and based on the checked notification indicators, whether to proceed with the next notification indicator or to decide on a presence of a notification for the predetermined notification identifier; and, if it is determined that a decision is to be made, interrupting the checking of notification before all notification indicators of the set have been checked and deciding, based on the checked notification indicators, whether a notification for the predetermined notification identifier is assumed to be present or not.

Fig. 7

**Description**

This invention is related to communication systems requiring the notification of a special event to one or many receivers. In particular, this invention relates to the autonomous interruption of the reception and detection of a multi-frame notification sequence based on an internal decision of the receiving device.

In networks without dedicated connection to each single device, notification of devices about events like incoming calls, arriving data or requests for certain services is necessary when devices assume an idle state with a part of their functions disabled. Network devices monitor the data stream on the network at pre-determined instances of time to look for notifications which tell them that any incident on the network requires their attention.

One popular example of such networks are wireless networks, and in particular cellular networks. As a special examples of a cellular network, UMTS will be explained in more detail herein below.

The paging procedure is one of the most fundamental procedures in a communication system (see Harri Holma and Antti Toskala, "WCDMA for UMTS, radio access for third generation mobile communications, second edition", John Wiley & Sons, Ltd. , for an overview). It is a procedure defined between the mobile terminal (in UMTS called UE) and the radio access network that is used to inform the UE about the occurrence of a special event and triggers an associated behaviour with the UE. Main purpose of the paging procedure is to inform a specific UE about an incoming call (speech or data), but it can also be used to indicate changes in the network configuration and to request all UEs in the cell to read the broadcast control channel (BCCH) where this information is transmitted.

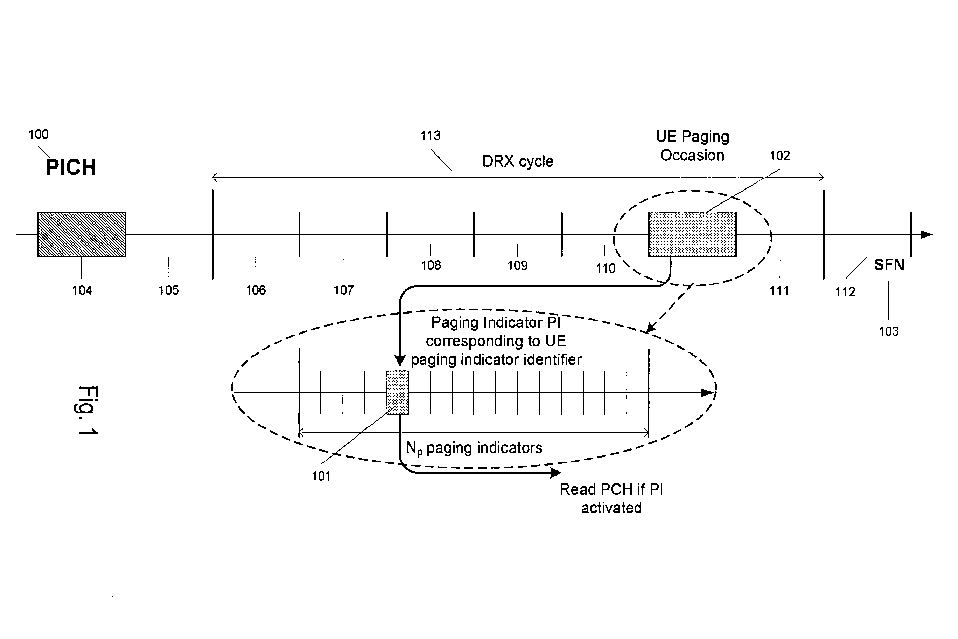

The most typical example for this procedure is the paging of an idle mode UE in order to set up a call initiated by a third party. The paging procedure is illustrated in figure 1. An idle mode UE is switched on and registered to the network but has no permanent connection to it. Once registered in the network, each UE is allocated to a paging group, which is characterised by its paging indicator PI 101. In idle mode, the UEs periodically monitor the PICH 100, where the status (active/non active) of the different paging indicators is signalled. When a specific paging indicator is activated, it triggers all UEs in the cell which belong to the corresponding paging group to read the Paging Channel (PCH) and check the validity of the paging message received on the PICH and if the page was intended for the complete paging group (general paging) or for the particular UE.

In more detail, each paging group is uniquely defined by two parameters. The first parameter is the paging occasion 102, which specifies the time instants when the UEs belonging to a specific paging group should read the PICH. The second is the paging indicator identifier, which identifies the indicator 101 associated with the paging group of interest within the paging occasion frame 102.

The positions of the paging occasions are defined in 3GPP TS 25.304v5.4.0 "User Equipment (UE) procedures in idle mode and procedures for cell reselection in connected mode" as follows:

$$\textit{Paging Occasions} = \textit{IMSI} \bmod \textit{DRX cycle length} + n * \textit{DRX cycle length,} \tag{1}$$

where IMSI is the globally unique UE identification number and n is a positive integer. Equation 1 indicates for each UE the system frame numbers of its paging occasions. The system frame numbering (SFN) 103 is a cyclic running time counter used to identify the transmitted frames over time. The SFN can assume values between 0 and 4095. Each frame 102, 104-112 has a length of 10ms. A definition of SFN can be found in 3GPP TS 25.402v5.3.0 "Synchronisation in UTRAN Stage 2". Moreover, the time is divided, for paging purposes, into DRX cycles 113 (Discontinuous Reception), which regroup a fixed number of frames (DRX cycle length), here 102 and 106 to 111. In 3GPP, a DRX cycle 113 is a network configured parameter and may vary between 8 frames (0.08s) and 512 frames (5.12s). Once per DRX cycle 113, each UE wakes up at the frame 102 corresponding to its paging occasion and monitors the paging indicator of interest 101 that is transmitted over the PICH 100.

The paging indicator identifier related to a specific paging group depends also on the UE identifier IMSI as follows (from 3GPP TS 25.304v5.4.0, cited above):

$$\textit{PI\_identifier} = (\textit{IMSI} \operatorname{div} 8192) \bmod N_p, \tag{2}$$

where Np = (18, 36, 72, 144) is the number of paging indicators per PICH frame as defined in 3GPP TS 25.211v5.5.0 "Physical channels and mapping of transport channels onto physical channels".

If the paging indicator PI 101 corresponding to the paging indicator identifier of the UE paging group is activated during one of the paging occasion frames of the UE paging group, the UE reads the PCH (paging channel).

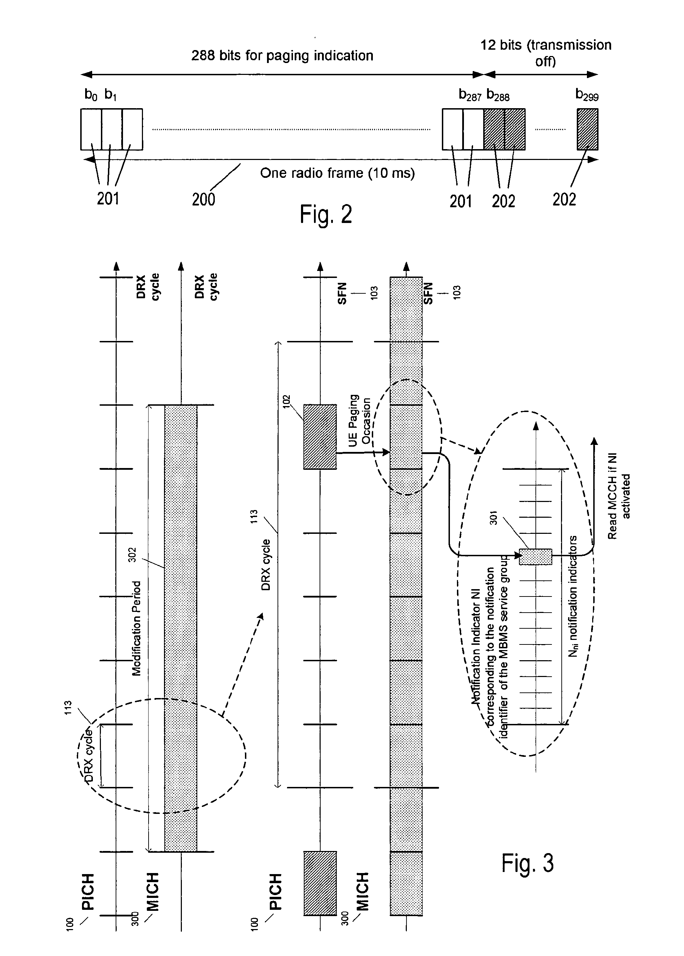

The physical channel PICH structure is specified in 3GPP TS 25.211v5.5.0. One frame 200 has a length of 10 ms and is subdivided in 300 bits 201, 202 as shown in Figure 2. The last 12 bits 202 are unused and reserved for further usage. The first 288 bits 201 are subdivided in Np paging indicators where Np is configured by the network. The paging indicators PI are further mapped on paging locations q depending on the SFN in order to combat time-localised interference as shown in the following equation.

$$q = \left( PI + \left\lfloor \left( \left( 18 \times \left( SFN + \lfloor SFN/8 \rfloor + \lfloor SFN/64 \rfloor + \lfloor SFN/512 \rfloor \right) \right) \bmod 144 \right) \times \frac{Np}{144} \right\rfloor \right) \bmod Np \qquad (3)$$

Depending on Np, each PI has a length L varying between 2 consecutive bits ($N_p$=144) and 16 consecutive bits ($N_p$=18). When a PI is activated, all corresponding L bits are set to 1. They are set to 0 otherwise.

The performance of the paging procedure is measured by two metrics: the probability of missed event $P_m$ and the probability of false alarm $P_f$. A missed event occurs when the UE fails to detect a paging message because of decoding errors due to an unreliable interface between the transmitter and the receiver A false alarm occurs when the paging decision derived by the UE is positive although this UE was not actually paged. This generally happens since several UEs share the same paging group. A false alarm can be caused by an unreliable interface.

The performance of the paging procedure is strongly influenced by 3 factors: the PICH transmission power, the number of paging indicators per frame $N_p$ and the DRX cycle length. The first two factors have a particularly strong influence on the probability of missed event $P_m$ (the probability of missing a page), whereas the last two impact mainly the probability of a false alarm $P_f$ (the probability of decoding an active page although no dedicated page has been sent). At a fixed PICH transmission power, the probability $P_m$ is much higher when Np is set to an high value (e.g. 144) than with a lower Np value (e.g 18). The exact value depends, of course, on the UE receiver performance. This aspect will not be further discussed, but it can be kept in mind that a low Np value implies a lower $P_m$. Unfortunately, this parameter has an opposite effect on the probability of false alarm, and a trade-off is necessary between $P_f$ and $P_m$. Indeed, assuming a perfect reception, the probability of false alarm is depending on the inverse of the total number of the paging groups, which is given by the following formula:

$$\text{Total number of paging groups} = N_P * DRX\ cycle\ length \qquad (4)$$

Some typical values for the probability of false alarm can be found in the right column of Table 1 further below.

With UMTS, a new aspect has been brought into the field of paging with the introduction of Multimedia Broadcast Multicast Service (MBMS).

In MBMS, a service (video clip, data download, etc.) is broadcast over a predefined service area and is received simultaneously by one or many mobiles that have previously subscribed to this service. An overview of the architecture and functional aspects of MBMS can is given in 3GPP TS 23.246v6.2.0 "Architecture and functional description", and the radio aspects of MBMS are currently standardised in 3GPP TS 25.346v6.0.0 "Introduction of the Multimedia Broadcast Multicast Service (MBMS) in the Radio Access Network (RAN) stage 2". The main purpose of MBMS is to allow transmission of the same information to several mobiles at the same time (point to multipoint transmission PtM). Therefore the network does not need to set up dedicated links to each of the interested mobiles in order to transmit this data. Three new channels are currently standardised by 3GPP in order to introduce MBMS services into the UMTS system. The MTCH (MBMS Traffic Channel) is foreseen for carrying the MBMS data content itself to several UEs within one cell during a PtM transmission. If only a few UEs are interested in the broadcast service, the network may rely on normal DPCH channels after establishment of separate dedicated radio links (Point-to-point transmission PtP). Finally, two control channels are introduced. The MCCH (MBMS Control Channel) is broadcasting the current MBMS configuration, signals MBMS specific parameters or messages. The MICH (MBMS indicator channel) is used for UE notification purpose.

One of the necessary functionalities to support MBMS is the MBMS notification procedure, with which the network informs the UEs interested in a specific service on the imminence of the transmission and signals the necessary configuration parameters. The main design criteria for this functionality are UE battery consumption, the robustness of the signalling against all kinds of perturbation and a low probability of false alarm. Unfortunately, these design targets might contradict each other, and typically a trade-off is needed between UE battery consumption and the probability of false alarm. For instance, UEs which have joined one or more MBMS services need to run a background process which periodically monitors the MICH. Frequent MICH readings might decrease the probability of false alarm, improve the signalling robustness and decrease the notification delay time, but would severely impact the UE power consumption.

For MBMS, the current working assumption, as presented in 3GPP TS 25.346v6.0.0, cited above, is to reuse the paging procedure as much as possible. Each MBMS service is mapped onto an MBMS service group depending on its MBMS service identifier like an UE is mapped onto a paging group depending on its UE identifier (ISIM). An MBMS service group is characterised by its notification identifier, which is mirroring the paging indicator identifier concept. The mapping function between MBMS service identifiers and notification identifier of the corresponding MBMS service group has not been specified and no concrete proposal has been made up to now, but a mapping function similar to the one presented in Equation 2 will be certainly used if finally specified. The number of different MBMS service identifiers currently envisaged is $2^{24}$, whereas the number of different MBMS service groups depends on the notification procedure that will be standardised. It is, however, not certain that an MBMS service group concept will be standardised as some proposals presented in 3GPP in R1-040536 "False Alarm on MICH", 3GPP TSG RAN1 Meeting #37 (Qualcomm) do not require this concept.

Furthermore, a new MBMS indicator channel (MICH) 300 as shown in Figure 3 is introduced and reuses the same frame structure as the PICH 100. It contains $N_{ni}$ MBMS notification indicators NI per frame, and its value may be different to the number of paging indicators Np carried per frame by the PICH. Each notification identifier of each MBMS service group is associated with a notification indicator NI 301 within the MICH frame. Depending on $N_{ni}$, each NI is constituted L bits, where L varies between 2 bits (Np=144) and 16 bits (Np=18). When a NI is activated, all corresponding L bits are set to 1. They are set to 0 otherwise. The MICH frames are further regrouped into Modification Periods 302, which should have a length at least as long as the longest DRX cycle considered in the cell. The notified MBMS service groups are the same over a modification period, and the MBMS UEs monitoring the notified MBMS service groups shall read the information broadcast over the MCCH at the next modification period.

The main difference with respect to the paging procedure is that there is no paging occasion concept in MBMS, since an MBMS service notification is signalled over all the frames forming a modification period. This is performed in order to reach all idle mode UEs in the cell. It is currently not specified when an idle mode UE should read the MICH but one possible solution would be to check the MICH at the paging occasion 102 defined by the paging procedure, as the UE has to monitor the PICH in any case for normal paging procedure as shown in figure 3. This would lead to power saving, as paging and MBMS notification would require only one receiver activation per DRX cycle.

Because of the absence of the time multiplexing between MBMS service groups realized by the paging occasions in the case of the standard paging procedure, the total number of MBMS service groups is significantly lower than the number of paging groups. The total number of MBMS service groups is straightforward to derive and equals to $N_{ni}$. As for the paging procedure, the MBMS service group size influences the probability of false alarm $P_f$ and the probability $P_m$ of missing a notification. In order to guarantee a low $P_m$, $N_{ni}$ should be set to a low value. This would however have a negative impact on $P_f$. Thus, since the loss of the time separation cannot be compensated by a higher number of notification indicators, the probability of false alarm for MBMS is significantly higher than for the pagingprocedure, as shown in column 2 of Table 1.

Table 1 -

| Probalitites of false alarm $P_f$ for MBMS notification with K=2 | | | | |
|---|---|---|---|---|
| Np | Current working assumption | Indicator combination method K=2 | Indicator sequence method K=2 | Paging procedure false alarm DRX cycle length = 1.28s 1 paged UE per paging occasion Uniform distribution of UE Id (IMSI) |
| 18 | 5,6% | 0,6% | 0,3% | 0,04% |
| 36 | 2,8% | 0,2% | 0,08% | 0,02% |

Two main proposals are currently considered within 3GPP in order to lower the probability of false alarm on the MICH. The first one has been proposed by Samsung in R1-040520 "Reducing the false alarm probability on MICH decoding", 3GPP TSG RAN1 Meeting #37 (Samsung), where a MBMS service group is identified by a particular combination of K notification indicator identifiers signalled by the corresponding notification indicators within one MICH frame. The second proposal from Qualcomm suggests mapping directly each MBMS service identifier onto a sequence of notification indicator identifiers signalled by the corresponding notification indicators over the successive frames composing a modification period (see 3GPP R1-040536 cited above). With this method, a single notification indicator identifier is signalled per frame. From this sequence, the UE reads K indicators in order to decide whether an MBMS service is notified.

Herein below, this first method will be called "indicator combination method" and the latter one will be called "indicator sequence method".

It is straightforward to notice that both proposals rely on a multi-component message to signal a notification (several notification indicators are used) and not on a single element message (one notification indicator) anymore. The main difference between the proposals is that the indicator combination method uses notification indicator identifiers of the same frame whereas the indicator sequence method considers notification indicators that are spread over several frames. Moreover it should be highlighted that with 3GPP R1-040536 (indicator sequence method), MBMS services are directly notified and the intermediate stage of mapping the MBMS service onto MBMS service group does not exist anymore.

The proposal of 3GPP R1-040520 to map each MBMS service group onto a combination of notification indicator identifiers within the same frame (indicator combination method) has the benefit of increasing the size of the MBMS service group and therefore decreasing the probability of false alarm.

The number of the MBMS service groups is given by the following formula:

$$MBMS_{gpsize} = \binom{N_{ni}}{K} = \frac{N_{ni}!}{(N_{ni} - K)!K!}, \qquad (5)$$

where K denotes the number of considered notification indicators for one MBMS service group within one frame.

With $N_{ni}$=18 and K=2, the number of MBMS service groups is 153.

It is straightforward to realize that, by the essence of the proposal itself, the UE needs to read the K notifications indicators in order to evaluate whether the monitored MBMS service group is notified or not. Depending on the UE implementation of this function, it might be necessary for the UE to switch its receiver K times during the monitored MICH frame. This might have a serious effect on the UE battery lifetime, as switching on and off a UE receiver frequently is rather power consuming.

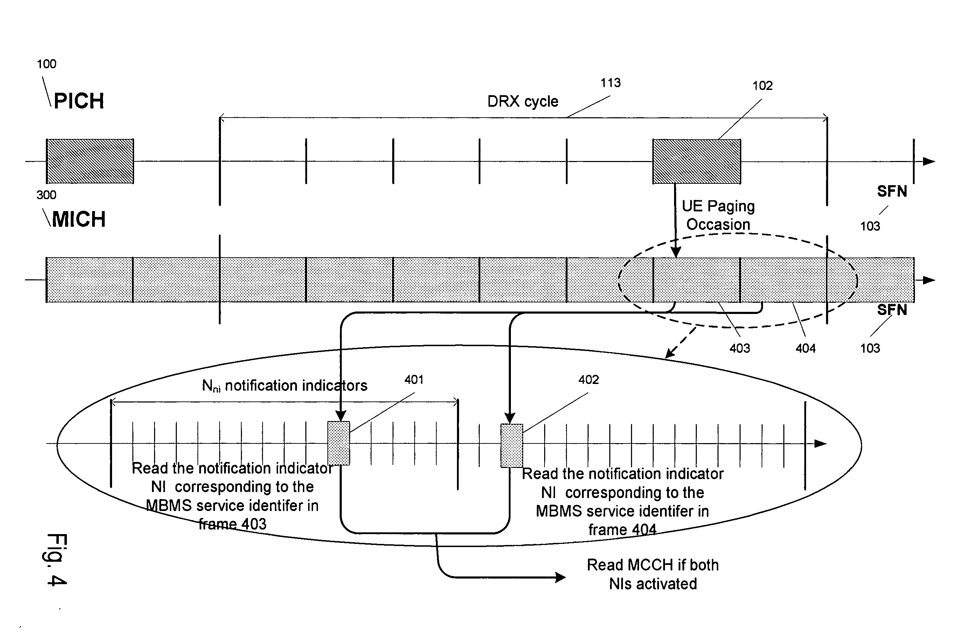

In 3GPP R1-040536, Qualcomm proposed to directly map each MBMS service identifier into a notification indicator identifier sequence transmitted over the modification period (indicator sequence method). From this sequence, K notification indicators are read by the UE. This is shown in figure 4. In the example shown in figure 4, K equals 2. Starting with the UE paging occasion 102, the UE reads two notification indicators 401, 402 within frames 403, 404 of MICH 300. If both notification indicators 402, 402 are positive, a notification of the corresponding MBMS service identifier is assumed to be present, and information is received from the MCCH about the cause of the notification.

With this method, the number of the MBMS service identifiers which can be distinguished depends on the number of notification indicators read by the UE. This is given by the following formula:

$$MBMS_{dist\_service} = N_{ni}{}^{K}, \qquad (6)$$

where K denotes the number of the read notification indicators of the notification sequence.

In a sense, the number of distinguishable MBMS services is similar to the number of MBMS service groups as they have the same influence on false alarm probability.

With $N_{ni}$ =18 and K=2, the number of the distinguishable MBMS service is 324, which is significantly higher than with the indicator combination method.

From an implementation point of view, 3GPP R1-040536 recommends to read a block of K indicators before making a decision on the MBMS service notification as shown in Figure 4. This would cause the UE receiver to stay on significantly longer compared with the current working assumption and therefore would severely decrease the battery lifetime.

In the co-pending European Patent Application ... , an alternative solution for the enhancement of the notification procedure is proposed. In this document it is recommended to identify the notified entity (MBMS service group or directly the MBMS service identifier) by a set of K coordinates, which are periodically signalled over the MICH.

The problem to be solved is to provide a notification mechanism based on a MICH structure that would guarantee a low UE battery power consumption and low probabilities of missed notification and false alarm. As highlighted earlier, the MICH transmission power and the length of the notification indicators mainly drive the probability of missed event and this aspect will not be treated here. The probability of false alarm depends strongly on how the MBMS service identifier is mapped on a single notification indicator identifier or a set of notification indicator identifier. This aspect will not be discussed further in the context of this invention and is the object of co-pending European Patent Application "Cyclic transmission of notification coordinates in a communication system", by the same inventor and applicant, filed at the same date (our docket number... ). The present invention focuses on the power consumption aspect of the notification procedures based multiple notification indicators, as all methods described earlier in this document require to read K indicators every DRX cycle. This behaviour has a detrimental impact on the overall battery lifetime.

It is the object of the present invention to provide a power saving method for detecting notifications in a communication device, in particular for the case that each notification identifier (device identifier, service identifier or service group identifier) is associated with a sequence of notification indicator identifiers.

This object is achieved by a method according to claim 1, a communication device according to claim 9, a computer-readable medium according to claim 12 and a communication system according to claim 13.

The power consumption of the communication device is reduced by successively receiving a finite set of notification indicators from a communication network, which in combination represents a notification identifier associated with the receiving device; subsequently checking each received notification indicator whether it is positive or negative; determining, after each checked notification indicator and based on the checked notification indicators, whether to proceed with the next notification indicator or to decide on a presence of a notification for said predetermined notification identifier; and, if it is determined that a decision is to be made, interrupting the checking of notification indicators before all notification indicators of the set have been checked and deciding, based on the checked notification indicators, whether a notification for said predetermined notification identifier is assumed to be present or not.

The presented method reduces the power consumption of the communication device without undue additional cost or trade-off for reliability.

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein

Figure 1 illustrates an example of a paging procedure as defined in 3GPP

Figure 2 shows an exemplary structure of a paging indicator channel as defined in 3GPP,

Figure 3 shows an example for a notification procedure for a Multimedia Broadcast Multicast Service as specified by 3GPP,

Figure 4 shows another example for a MBMS notification procedure according to an indicator sequence method,

Figure 5 shows how the present invention can be applied to a notification procedure as depicted in figure 4,

Figure 6 depicts a flow chart for a step-by-step reading according to one embodiment of the invention,

Figure 7 illustrates a flow chart for a step-by-step reading of a notification sequence for reduced power consumption according to another embodiment of the invention,

Figure 8 shows an advantageous method for defining a start occasion of a notification detection according to a sequence based method.

Figure 9 shows an exemplary structure of a communication device.

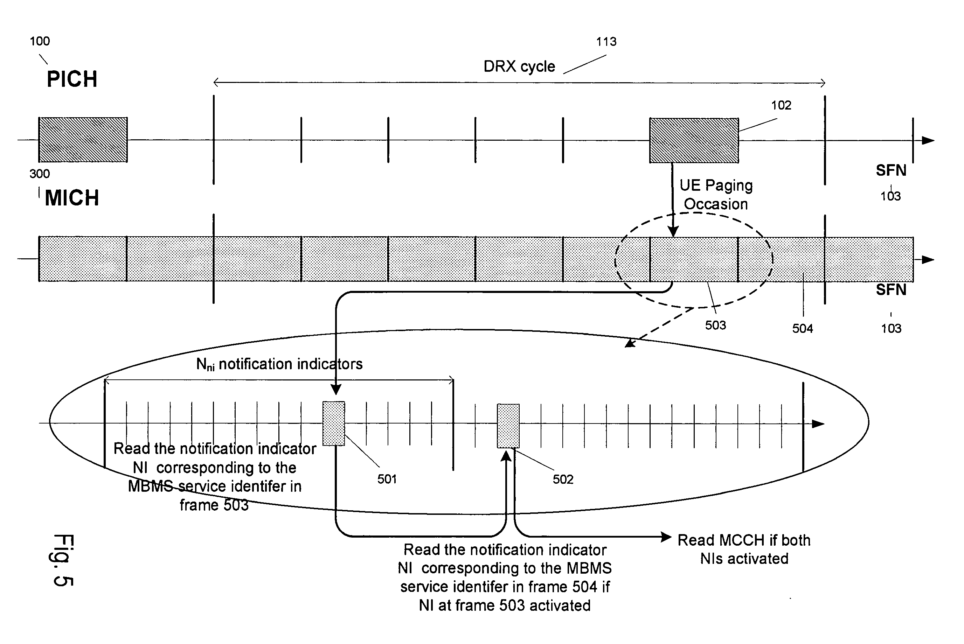

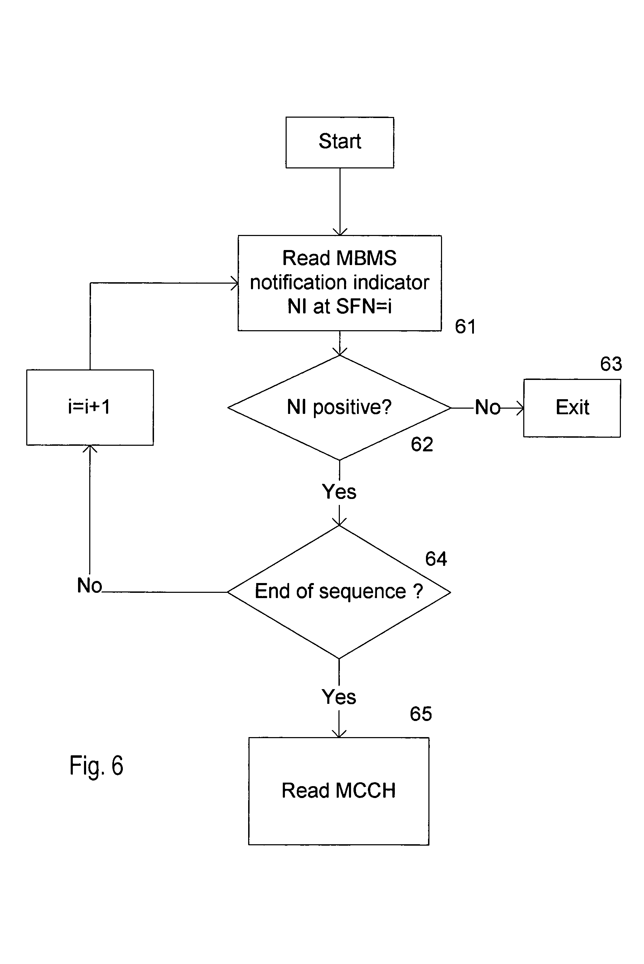

Referring now to figure 5 and 6, the idea of the invention is explained in detail for the example of the indicator sequence method. In this example, K again equals 2, although the invention could be applied without restriction to any greater value. Indeed, the power saving increases significantly for increasing K. At the UE paging occasion 102, the UE reads the notification indicator 501 from frame 503 corresponding to the MBMS service identifier with step 61. The UE may read notification indicator identifiers in any order. Therefore there is no requirement to start at a certain frame, and the most appropriate frame from power saving point of view is chosen. Notification indicator 501 is identified by a notification indicator identifier. This corresponding identifier is comprised in a sequence of notification indicator identifiers associated with a notification identifier. The notification identifier in turn may be a service identifier or a service group identifier of a service subscribed by the UE or, in other applications, an identifier of the UE itself. In any case this notification identifier is associated in some way with the UE meaning that the corresponding notification is relevant for the UE. The UE now checks the contents of indicator 501 in step 62 and determines whether a decision about the presence of a notification can already be made or not. In the case that the indicator 501 is negative, it is determined in step 63 that a decision can be made, the checking of further indicators is interrupted, and it is decided that a notification is assumed not to be present. In the case that indicator 501 is positive, the probabilities for both alternatives are too similar, and it is checked in step 64 whether the sequence has reached its end. In the example of figure 2, K equals 2, and one more indicator is available. Steps 61 and 62 are repeated to read and check the next indicator 502 of the sequence in the subsequent frame. If indicator 502 is negative, it is determined in step 63 that no notification is assumed to be present. If indicator 502 is positive, step 64 states that the sequence has been complete read and checked and decides that a notification is assumed to be present (although it might be false alarm due to the co-existence of two other notifications). As a consequence, information about the cause of the notification is obtained from another channel, like for example the MCCH, in step 65. Any false alarm could then be discovered from this information.

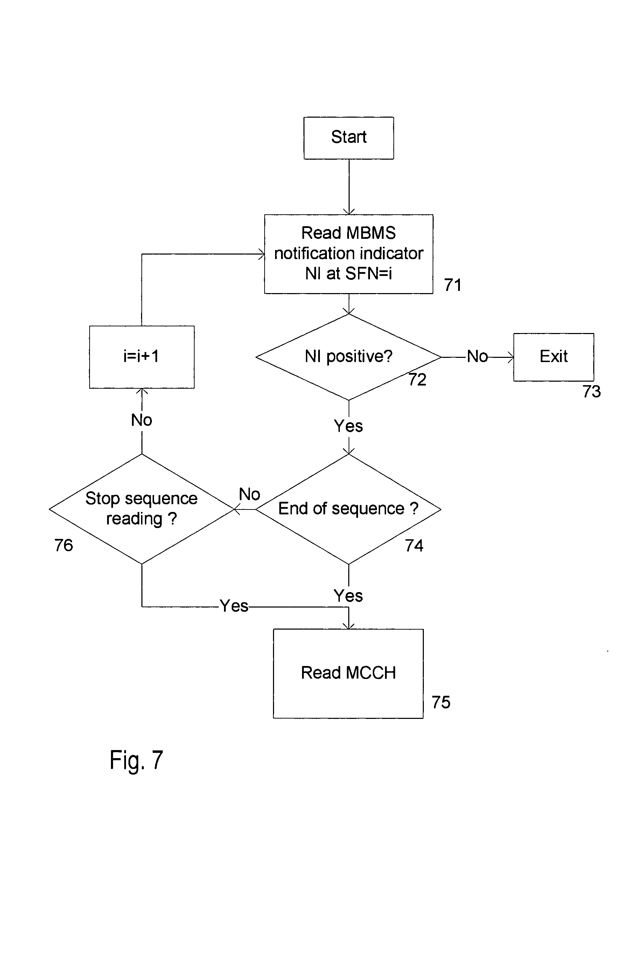

In another alternative of the invention, the notification detection can be interrupted advantageously without receiving a negative indicator, if a sufficient number of positive indicators have been received so that the presence of a notification can be assumed with sufficiently high probability. This alternative yields further reduction of power consumption. It can be implemented alone or advantageously in combination with the alternative described above. This implementation is illustrated in figure 7. Steps 71 to 75 correspond to steps 61 to 65 of figure 6. In the case that the checked indicator is positive and the end of the sequence has not yet been reached, there is another decision in box 76 whether a sufficient number of positive indicators has already been checked to assume with sufficient probability that a notification is present. The criterion for this is determined by the UE, although it may rely on information received from the network. One straightforward possibility would be to check a fixed number of indicators depending on the length of the sequence. However, as the risk of false alarm depends on the traffic payload on the MICH, this could be influencing the criterion in a way that more indicators are checked with a high traffic payload on the MICH, and a positive decision is made after fewer indicators have been checked in the case that there are only few notifications present in total on the MICH. One way to obtain information about the traffic payload of the MICH would be to calculate the fraction of positive indicators among all indicators on the MICH or the fraction of positive indicators among all received indicators. Another alternative with less effort and therefore less power consumption for the UE would be to obtain this information by means of a broadcast message from the entity which manages the content of the MICH. A further possibility is to maintain a record of false alarms per time unit, observed by the receiving device in the past. This value of false alarms per time unit could also serve as a value influencing the probability of a false alarm.

The described procedures will save UE power compared to the original proposals and thus extent the battery lifetime. The same enhancement is possible in case of an intra-frame combination of notification indicators, but there might be a lower impact on the UE power consumption. The indicators might be consecutive or located close together and therefore it might not be very power consuming to keep the receiver switched on for a longer period in order read all indicators.

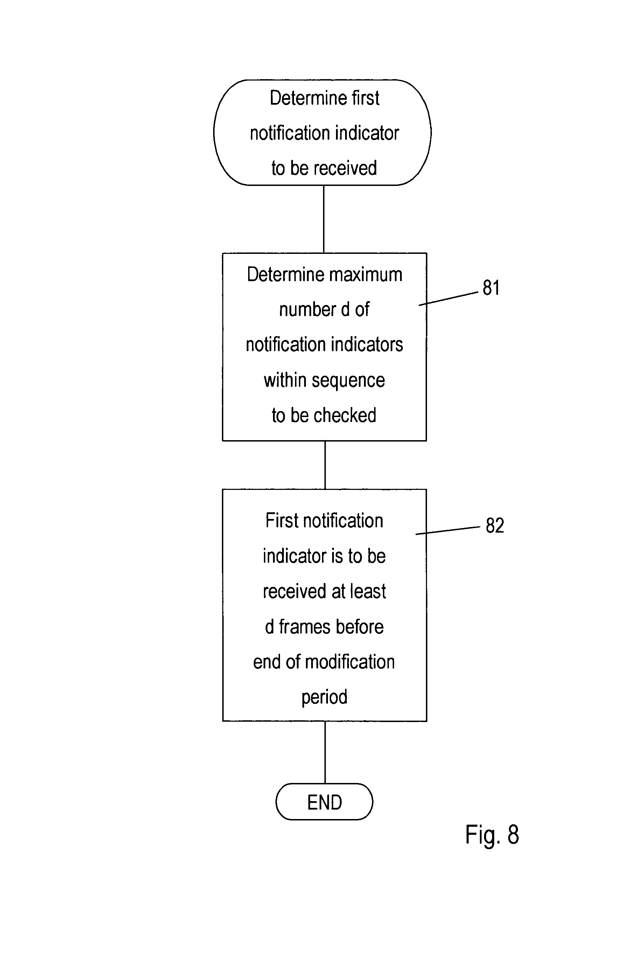

As explained above, in the case of MBMS notification, information about the cause of the notification should be received in the modification period following the notification. As can be seen in figure 3, it can be disadvantageous to start with the detection of the notification at the time of the UE paging location, if this time is closer to the end of the modification period than the number of indicators to be checked, because the notification detection might not be finished before the start of the next modification period, and the state of the notification might be opposite in the next modification period rendering a proper detection impossible. Therefore, according to another alternative of this invention, a start occasion for the detection with respect to the modification period is determined like shown in figure 8. First, the number of indicators d to be checked for the detection of a notification is determined in step 81. This could either be the length of the indicator sequence or a number determined as criterion for box 76 of figure 7. In box 82 the start occasion is defined at least d frames before the end of the modification period. Thus it is assured that the reception and detection is started early enough to allow to receive and check at least as many notification indicators out of the sequence as required for a proper detection of the notification. In other networks other time intervals than frames and modification periods may exist. This method is applicable to all systems where the second time interval, during which the state of all notifications is kept constant, comprise a fixed entire number of the first time intervals containing one notification indicator each for each sequence.

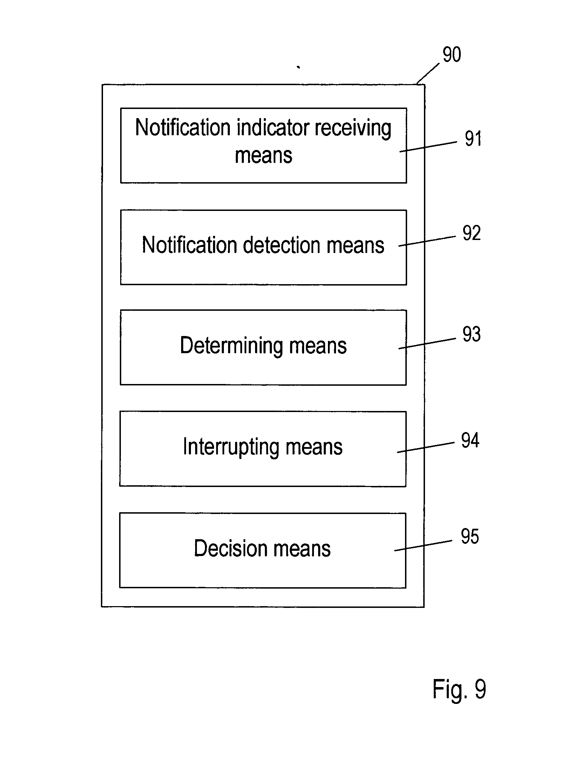

Figure 9 illustrates a schematic of a network device for carrying out the method described above. Among other components not interesting in this context, the device 90 comprises notification indicator receiving means 91 like a network interface for receiving notification indicators from a network, notification detection means 92 for checking the received notification indicators and detecting a notification designated for a notification identifier identifying the device itself, a service to which the device is subscribed or which it hosts or a service group to which such a service belongs. The device 80 further comprises determining means 93 for determining, after each checked notification indicator and based on the checked notification indicators, whether a decision about the presence of a notification for the mentioned notification identifier is to be made; interrupting means 94 for interrupting the detection of the notification before all notification bits have been received if it is determined that a decision is to be made; and decision means 95 for deciding, based on the received notification indicators, whether a notification for said determined notification identifier is existing assumed to be present or not. Means 92 to 95 may be implemented in software on a processing unit of the device 90.

Another embodiment of the present invention relates to the implementation of the above described various embodiments using hardware and software. It is recognized that the various above mentioned methods as well as the various logical blocks, modules, circuits described above may be implemented or performed using computing devices, as for example general purpose processors, digital signal processors (DSP), application specific integrated circuits (ASIC), field programmable gate arrays (FPGA) or other programmable logic devices, etc. The various embodiments of the present invention may also be performed or embodied by a combination of these devices.

Further, the various embodiments of the present invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

**Claims**

1. Method for detecting notifications in a communication device, said method comprising the steps of
   successively receiving a finite set of notification indicators from a communication network (61, 71), which in combination represent a notification identifier associated with said device;
   subsequently checking each received notification indicator whether it is positive or negative (62, 72);
   determining, after each checked notification indicator and based on the checked notification indicators, whether to proceed with the next notification indicator or to decide on a presence of a notification for said predetermined notification identifier (62, 72, 76);
   and, if it is determined that a decision is to be made,
   interrupting the checking of notification before all notification indicators of the set have been checked and
   deciding, based on the checked notification indicators, whether a notification for said predetermined notification identifier is assumed to be present or not.

2. The method according to claim 1, wherein said interrupting and deciding steps are performed when a negative notification indicator is received, the result of the deciding step being that no notification for the notification identifier is assumed to be present (63, 73).

3. The method according to claim 1, wherein said interrupting and deciding steps are performed after a number of positive notification indicators determined by said communication device have been received, and no negative notification indicator has been received, the result of the deciding step being that a notification for the notification identifier is assumed to be present (75).

4. The method according to claim 3, additionally comprising the step of determining said number of positive notification indicators to be received, based on an actual value influencing a probability of false alarm.

5. The method according to claim 4, wherein said actual value is a number of false alarms per time unit, observed by said communication device before said step of determining said number of positive notification indicators to be received.

6. The method according to claim 4, wherein said actual value is a traffic payload value received from said communication network.

7. The method according to claim 4, additionally comprising the step of receiving further notification indicators, and said actual value is a fraction of positive indicators among all indicators received.

8. The method according to one of the claims 3 to 7, wherein said notification indicators being elements of said finite set are transmitted on said network in first time intervals, one of said notification indicators being elements of said finite set is transmitted per first time interval, and said notification for said predetermined notification identifier is always present for the duration of a second time interval (302), said second time interval (302) comprising a fixed entire number of said first time intervals, the method additionally comprising the step of
   determining a first notification indicator (401, 501) out of said finite set to be received by said receiving step at least d time intervals before an end of a current second time interval, wherein d is said determined number of positive notification indicators to be received.

**9.** A communication device (90), for use in a communication system, comprising notification indicator receiving means (91) for successively receiving a finite set of notification indicators from a communication network, which in combination represent a notification identifier associated with said device and notification detection means (92) for checking the received notification indicators and detecting a notification designated for said notification identifier, further comprising

determining means (93) for determining, after each checked notification indicator and based on the checked notification indicators, whether to proceed with the next notification indicator or to decide on a presence of a notification for said predetermined notification identifier;

interrupting means (94) for interrupting the checking of notification before all notification indicators of the set have been checked if it is determined that a decision is to be made; and

decision means (95) for deciding, based on the received notification indicators, whether a notification for said determined notification identifier is assumed to be present or not.

**10.** The communication device of claim 9, wherein, when a negative notification indicator is received, said interrupting means interrupts the detection of the notification and said decision means decides that no notification for the notification identifier is assumed to be present.

**11.** The communication device of claim 9, wherein, when a pre-determined number of positive notification indicators have been received and no negative notification indicator has been received, said interrupting means interrupts the detection of the notification and said decision means decides that a notification for the notification identifier is assumed to be present.

**12.** A computer-readable medium having stored thereon instructions that, when executed on a processor of a communication device, cause the processor to perform the method of one of the claims 1 to 8.

**13.** A communication system comprising:

an apparatus configured to send notifications for determined notification identifiers;

a network for connecting elements of the communication system; and

at least one communication device (90) according to one of the claims 9 to 11.

Fig. 1

Fig. 2

Fig. 3

EP 1 608 196 A1

100

**PICH**

300

**MICH**

113 — DRX cycle

102

UE Paging Occasion

SFN

103

SFN

103

403    404    103

$N_{ni}$ notification indicators

401    402

Read the notification indicator NI corresponding to the MBMS service identifer in frame 403

Read the notification indicator NI corresponding to the MBMS service identifer in frame 404

Read MCCH if both NIs activated

**Fig. 4**

**PICH** 100

113

DRX cycle

102

300

UE Paging
Occasion

**MICH**

SFN
103

SFN

503 504 103

$N_{ni}$ notification indicators

Read the notification indicator
NI corresponding to the
MBMS service identifer in
frame 503

501 502

Read the notification indicator
NI corresponding to the MBMS
service identifer in frame 504 if
NI at frame 503 activated

Read MCCH if both
NIs activated

Fig. 5

EP 1 608 196 A1

Start

Read MBMS
notification indicator
NI at SFN=i          61

i=i+1

NI positive? ──No──→ Exit    63
         62

Yes

End of sequence ?    64

No

Yes

Read MCCH    65

Fig. 6

Start

Read MBMS
notification indicator
NI at SFN=i                71

i=i+1

NI positive?          72    No→    Exit          73

No                          Yes

Stop sequence       No    End of sequence ?
reading ?

76                                                  74

Yes                          Yes

Read MCCH              75

Fig. 7

Determine first
notification indicator
to be received

Determine maximum
number d of
notification indicators
within sequence
to be checked

81

First notification
indicator is to be
received at least
d frames before
end of modification
period

82

END

Fig. 8

90

Notification indicator receiving means — 91

Notification detection means — 92

Determining means — 93

Interrupting means — 94

Decision means — 95

Fig. 9

**European Patent Office**

## EUROPEAN SEARCH REPORT

Application Number

EP 04 01 4357

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 2004/017581 A (BEIJING SAMSUNG TELECOM R & D ; XIAO SHANPENG (CN); LI DETAO (CN); SUN) 26 February 2004 (2004-02-26) | 1,9,12, 13 | H04Q7/38 H04L12/18 |
| A | * page 1, lines 12-29 * <br><br> * page 1, line 35 - page 2, line 24 * <br> * page 3, line 15 - page 5, line 11 * <br> * page 6, lines 15-18 * <br> * page 6, lines 26-37 * <br> * page 6, line 38 - page 7, line 16 * <br> * page 11, lines 28-35 * <br> * page 12, line 31 - page 13, line 16 * <br> * page 14, line 17 - page 16, line 16 * <br> ----- | 2-8,10, 11 | |
| X | EP 1 418 686 A (SAMSUNG ELECTRONICS CO LTD) 12 May 2004 (2004-05-12) | 1,9,12, 13 | |
| A | * paragraphs [0007] - [0016] * <br><br> ----- | 2-8,10, 11 | |
| X | EP 1 392 074 A (SAMSUNG ELECTRONICS CO LTD) 25 February 2004 (2004-02-25) | 1,9,12, 13 | **TECHNICAL FIELDS SEARCHED (Int.Cl.7)** |
| A | * paragraphs [0026] - [0034], [0041] - [0046], [0051] - [0056] * <br> ----- | 2-8,10, 11 | H04Q H04L |

The present search report has been drawn up for all claims

| Place of search | Date of completion of the search | Examiner |
|---|---|---|
| Munich | 3 December 2004 | Mele, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 01 4357

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2004

| Patent document cited in search report | | Publication date | Patent family member(s) | | Publication date |
|---|---|---|---|---|---|
| WO 2004017581 | A | 26-02-2004 | CN | 1476259 A | 18-02-2004 |
| | | | WO | 2004017581 A1 | 26-02-2004 |
| EP 1418686 | A | 12-05-2004 | EP | 1418686 A2 | 12-05-2004 |
| | | | JP | 2004159334 A | 03-06-2004 |
| | | | US | 2004227618 A1 | 18-11-2004 |
| EP 1392074 | A | 25-02-2004 | EP | 1392074 A2 | 25-02-2004 |
| | | | JP | 2004135293 A | 30-04-2004 |
| | | | US | 2004087320 A1 | 06-05-2004 |

EPO FORM P0459